# EUROPEAN PATENT SPECIFICATION

(11) **EP 3 992 509 B1**
(45) Date of publication and mention of the grant of the patent: **05.06.2024**
(21) Application number: 21204029.9
(22) Date of filing: 21.10.2021
(51) Int. Cl.: F16L 11/04, E03C 1/00, F16L 33/22, F24D 1/00, B21D 39/04, B25B 27/10, F16L 33/207

(54) **PRESS FITTING AND METHOD OF CONNECTING A PRESS FITTING WITH A PIPE END**
PRESSFITTING UND VERFAHREN ZUM VERBINDEN EINES PRESSFITTINGS MIT EINEM ROHRENDE
RACCORD À PRESSION ET PROCÉDÉ DE RACCORDEMENT D'UN RACCORD À PRESSION AVEC UN EXTRÉMITÉ DE TUYAU

(30) Priority: 27.10.2020 LU 102156
(43) Date of publication of application: 04.05.2022
(73) Proprietor: Aliaxis Research & Technology, 78990 Élancourt (FR)
(72) Inventor: TEIXEIRA PINTO, José, 78540 Vernouillet (FR); ABDULHAMEED, Hemin, 78540 Vernouillet (FR); COMTE, Dominique, 78540 Vernouillet (FR); AUDREZET, Baptiste, 78540 Vernouillet (FR)
(74) Representative: Sonnenberg Harrison Partners

(56) References cited:
- EP-A1- 2 130 625
- EP-A1- 2 949 981
- WO-A1-2016/179070
- WO-A1-2018/167158
- WO-A2-2011/096678
- US-A1- 2011 303 593

## Description

### Cross-reference to related applications

This application claims priority of Luxembourg patent application No. LU102156 filed on 27 October 2020.

### Field of the invention

The present invention concerns compression fittings or press fittings. The present invention also concerns a method of assembly of such press fittings and a tool for assembly of press fittings for pipes intended to transport gases and liquids.

Compression fittings, also called press fittings, which can connect tubes by compression and deformation using one or two sleeves, are well known in the field of tubing, piping and line system installations, for example for water, gas or heating.

Press fittings are used to connect not only pipes made of metal but also those made from plastic or composite metal-plastic. They are used to connect appropriately arranged sections of pipe, with their connecting pieces being inserted into the ends of the pipes to be connected, where they are then usually de-formed or crimped or pressed. They are fastened in certain fastening zones on the connection pieces by using so-called system compression tools that usually have interchangeable pressing jaws.

The tube, pipe, or conduit systems are assembled in several steps: first an end of the tube or pipe is inserted into a fitting, and then the fitting is crimped to guarantee good mechanical strength and a leak-tight installation. In some cases two or even more ends of two or more respective tubes or pipe are inserted into one fitting having respective reviving sections and the respective sections intended to be deformed can be deformed simultaneously or one after the other, the latter being more common practice. The compression is usually essentially a pressure on the fitting sleeve which causes the deformation or shaping of the fitting towards the pipe which is inserted into it. The pressure is usually applied to the fitting using a crimping tool with press jaws. These pressing jaws apply pressure to the fitting material in order to bring about an interaction with the surface of the pipe(s)/tube(s) to be connected, thus achieving a reliable connection and a reliable seal. In some cases the crimping also involves a deformation of the tube or piping itself in order to provide an interaction between the tube and an inner part of the fitting. US 2011/303593 A1 describes a press fitting for the connection of a pipe end according to the preamble of claim 1 and a method of connecting the press fitting with the pipe end according to the preamble of claim 7.

For multilayer pipes high pressure force is generally required during the crimping process, typically in the range of 20 to 30 kN. This amount of force is obtained using a heavy mechanical tool, typically weighting 5 to 7 kilograms. It may be difficult for a user to handle such a heavy tool all day and sometimes at locations which are not easy to reach. A repetitive task of crimping with a heavy tool combined with the working condition during installation can adversely affect the health of the user and can impair the connection quality.

One object of the present invention is to reduce the amount of force required during the crimping process, therefore of the energy the tool needs to apply.

It is another object of the present invention to provide a secure connection of at least one tube or pipe, in particular part of a multilayer piping system for hot and cold-water installations inside buildings.

### Summary of the invention

To this end, the present invention proposes a mechanical fitting according to claim 1, a method according to claim 7, and an assembly as defined in claim 9. Preferred embodiments are defined in the dependent claims.

In particular, the invention proposes a press fitting for the connection of a pipe end, comprising a main body with a fitting portion and a fitting support extending in an axial direction from the fitting portion, a compression sleeve, wherein the compression sleeve is designed to surround the fitting support, wherein the compression sleeve and the fitting support define a pipe insertion space radially between the compression sleeve and the fitting support for inserting a pipe end to be fixed on said fitting support. The compression sleeve has an accordion-shape with a plurality of valleys in alternance with a plurality of peaks, the accordion shape being configured to translate an axial deformation of the compression sleeve into an inward radial force allowing to provide a secure engagement with the pipe, preferably also leading to the crimping of the pipe end against the fitting support.

In one embodiment, the plurality of valleys defines a plurality of contact zones in contact with the pipe end to transmit the inward radial force to the pipe end when the pipe end is inserted into the pipe insertion space. It should be understood that the inward radial deformation of the compression sleeve locks the pipe on the fitting body whilst applying a homogenic pressure at the interface pipe/fitting that will result good water tightness.

Having more than one valley results in several distinct contact zones. This is advantageous for water tightness.

In yet another embodiment, the valleys define a curvature area with a valley radius and the peaks have a peak angle, wherein the peak angle is chosen to prevent an outward radial deformation of compression sleeve and the valley radius is determined as a function of the diameter of the pipe. Thanks to the shape of the accordion with sharp angular peaks and radius valleys, the axial movement can transfer to radial inward movement, and the angle of the peaks prevents radial outward movement. Thus, the sleeve does not need to be restricted outside to make joining.

The compression sleeve may be mounted to the fitting portion via cooperating fixation arrangement, wherein a radial projection may be provided on one of the compression sleeve and the fitting portion to cooperate with a recess on the other one of the fitting portion and the compression sleeve.

In an embodiment, an external case is provided around the external sleeve to prevent outward radial deformation of the compression sleeve during crimping, in particular wherein the case has axial grooves.

The fitting portion or the case may be provided with windows spaced apart in the circumferential direction, to allow to visually observe the correct pipe insertion.

The present invention also proposes a method of connecting a press fitting with a pipe end, comprising the steps of : inserting the pipe end into a pipe insertion space radially between a fitting support and a compression sleeve, pushing axially the compression sleeve towards the fitting portion, thereby axially deforming the compression sleeve, wherein the axial deformation of the compression sleeve is translated into an inward radial deformation of the compression sleeve allowing to provide a secure engagement with the pipe, preferably also leading to the crimping of the pipe end against the fitting support.

The present invention further proposes an assembly comprising a press fitting according to any of claims 1 to 6 and a tool for connecting said press fitting with a pipe and/or for performing a method according to claim 7, comprising a fixed part, which can be fixedly mounted on the press fitting, in particular to the fitting portion, to fixedly hold the press fitting and an axially moving part designed to be mounted around the pipe, and to push axially against the compression sleeve towards said fitting portion.

Hence the compression sleeve is deformed in the same direction as the direction the tube is inserted. However, a compression of the compression sleeve in the other direction would also be an option.

The pipe or tube can be mono material and made of thermoplastic materials including but not limited to PE, PB, PEX, PERT, PER ... or Composite (multi material tube structure) with different layers of functional materials (PEX, PERT, PVDF, Aluminium...). The material for the fitting body can be metal (brass, Stainless steel....) Thermoplastic (PVC, PPSU, PVDF, PPS), that can also be reinforced with fibre glass reinforcement.

It is important to consider that the material of the fitting body must be harder than the material of the pipe surface in contact with the fitting body if a tight engagement is to be provided for radially between the pipe and the fitting body.

The body can be made from brass or polymer.

A full plastic press fitting can also be contemplated.

It should be noted that there is no need for pipe preparation if the fitting body does not contain an O-ring.

The invention also proposes the use of a press fitting such as described, wherein a crimping tool is configured to transmit the crimping pressure to the compression sleeve.

The invention also concerns a crimping process including the application of crimping pressure, by a crimping tool, on a compression sleeve of a press fitting.

It requires much less energy to connect e.g. multilayer pipes in comparison with existent mechanical press fitting, the amount of energy reduction is up to 70 %.

The crimping process can be achieved with a small displacement of tool sliding the external sleeve from the pipe side toward the fitting body side. The movement of the tool is from the pipe toward the fitting. The displacement needed to complete the crimping is very small therefore with a low load resulting in a very low energy. Low energy will result in reduced needs for robust tools and can thus provide lighter tools.

The press fitting and method of the present invention have also a great impact on the crimping tool, by reducing very considerably the weight of the crimping tool to become lighter, more ergonomic, and increase its lifetime.

This technology has great impact on health and performance of the installer with a lighter and more ergonomic tool.

In addition, it is possible to have a handheld crimping tool which does not need to be electrically powered. A low crimping energy with small displacement requires low force to perform the crimping, in a consequence, a light tool with lowered requirements as to robustness can be used.

### Brief Description of the figures

Other characteristics and advantages of the invention will be more clearly evident upon reading the description of several currently preferred embodiments, provided as examples only, with reference to the attached drawings, wherein:
- Figure 1 shows an exploded view of press fitting according to a first aspect of the present invention,
- Figure 2 is cross section of the press fitting of Fig. 1,
- Figure 3A to 3C is a detailed view of different press fitting according to a first aspect of the present invention,
- Figure 4A to 4D is detailed view of a compression sleeve in one aspect of the present invention,
- Figure 5 a view of another embodiment of a press fitting in one aspect of the invention,
- Figure 6 shows a crimping process according to one aspect of the invention,
- Figure 7 is a view of a crimping tool in one aspect of the disclosure.

In the figures, identical parts are identified using the same reference numbers.

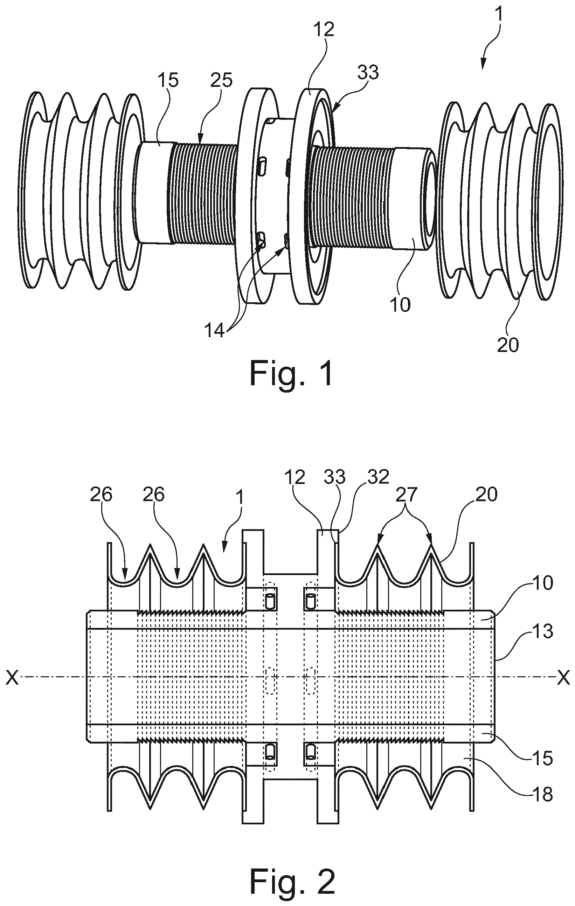

Figures 1 and 2 show a press fitting 1 allowing the connection of a tube according to one aspect of the present invention. The tube may be for example a pipe for/in a piping system for fluid installations inside buildings, such as a multilayer pipe of a multilayer piping systems for hot and cold-water installations inside buildings. The fitting may form one side of a connector having similar or another kind of fitting on its other end or side. The fitting may also be provided at a port of a fluidic device for connecting a pipe thereto.

The mechanical fitting comprises a main body 10 for receiving a pipe end to be connected and a compression sleeve 20 provided to be crimped on the pipe end.

The main body 10 comprises a fitting portion 12 with a fitting support 15 extending axially from the fitting portion 12. The fitting support 15 extends in the axial direction X-X between said fitting portion 12 and a pipe insertion end 13.

The fitting support 15 has a plurality of radial recesses 25 extending on its outer circumference, which allow to grip the pipe. The radial recesses or grips 25 on the fitting portion 12 of the fitting support ensures good grip of the compression sleeve. This ensures the sealing of the press fitting even without using an O-ring.

The compression sleeve 20 is designed to surround the fitting support 15. The fitting support 15 and the compression sleeve 20 defines an insertion space 18 for the insertion of the pipe end to be fixed.

The fitting portion 12 of the main body is provided with windows 14 spaced apart in the circumferential direction, to allow to visually observe the correct pipe insertion.

The compression sleeve 20 is fixed to the main body 10, at the fitting portion of the main body 10. In the example of Fig. 1 and 2, the compression sleeve 20 is provided with a radial circumferential projection 32 on its inner surface received in a circumferential recess or groove 33 in the fitting portion 12 of the main body 10. This is not limiting the invention and the compression sleeve may as well be provided with a recess cooperating with a projection of the fitting portion, or any other fixation arrangement can be contemplated.

The compression sleeve has an accordion-shape or is configured similarly to a bellows with a plurality of valleys 26 in alternance with a plurality of peaks 27 as can be seen on the figures. In the example of the figures there are three valleys and four peaks, but this is not limiting the invention.

The specific design of the compression sleeve with valleys and peaks is adapted to translate axial deformation of the compression sleeve into an inward radial deformation leading to the crimping of the pipe end against the fitting support 15.

The skilled person will understand that the contact between the compression sleeve and the pipe end occurs circumferentially via the valleys 26. The plurality of contact zones via the valleys 26 against the pipe ensure the maintaining of pipe.

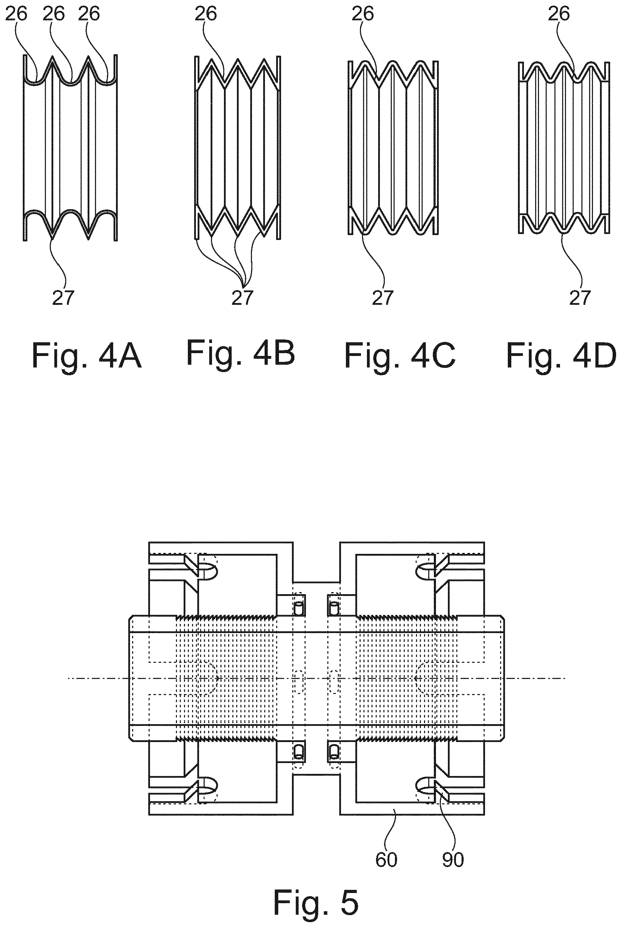

The sleeve can have a different accordion shape profile as shown in Figures 4A to 4D, with a plurality of valleys and peaks. In particular, the valleys may have a curved profile in the internal radial direction (Fig. 4A, 4D) but may also have a sharp or pointed profile (Fig. 4B, 4C). Similarly, the peaks may have a sharp or pointed profile (Fig. 4A, 4B) but may as well have a curved profile in the external radial direction (Fig. 4C, 4D).

In any case, the valleys define a curvature area with a valley radius and the peaks have a peak angle. The peak angle is chosen to prevent an outward radial deformation of compression sleeve. The valley radius is determined as a function of the diameter of the pipe. The radius of valley should preferably be optimised according to diameter of the pipe, in order to provide enough inward deformation to crimp the pipe and reach out standard requirement solicitation.

The radius of valleys, the distance between peaks and valley, the angle between peaks are depending on the diameter of the pipe. For a pipe diameter 16 mm to 60 mm, the radius of valley may vary from 1.5 to 7 mm, the distance between peak and valley may vary from 4 mm to 10 mm, the angle between peak can be vary between 30° to 60°. Each combination of body and sleeve may have a different value chosen among these ranges.

An external case 60 may be provided around the compression sleeve 20 to prevent outward radial deformation of the compression sleeve during crimping. The external case 60 has an external wall enveloping the external sleeve.

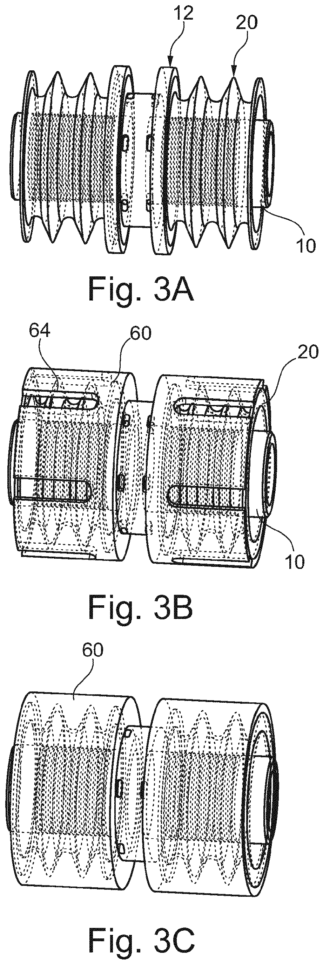

The external wall may be provided with axial grooves 64, as best seen on Figures 3B. These axial grooves can allow for visual inspection of the crimping result and may also be used to adapt the rigidity of the external case such that the accordion sleeve is the more confined the more the crimping process takes place.

The external case 60 is not necessary but may be required to prevent outward deformation of compression sleeves. In particular, it should be noted that compression sleeve having peaks with sharp or pointed profile of the peaks do not undergo an outward deformation, such as the compression sleeve of Fig. 4A. In this example, the external case is not needed.

On the other hand, compression sleeve having peaks with rounded profile or low angles, such as the compression sleeves shown on Fig.4C and Fig.4D, tend to undergo an outward deformation..In this case, the external case 60 provides a counter resistance against the outward deformation, to ensure that the axial deformation of the compression sleeve transforms into an inward deformation.

Therefore, it should be understood that the type of the body (as shown on Fig. 3) is important to determine which compression sleeve (Fig. 4) profile can be used. If a body without external case or with an external case with openings ( Fig.3A and 3B), then the compression sleeve should be chosen with a sharp profile of peak and valley, to help translating the axial deformation into inward deformation , otherwise the pipe will not be crimped if the axial deformation translate into outward deformation, or not sufficiently translate into inward deformation.

The pipe or tube can be mono material and made of thermoplastic materials including but not limited to PE, PB, PEX, PERT, PER... or Composite (multi material tube structure) with different layers of functional materials (PEX, PERT, PVDF, Aluminium...). The material for the fitting body can be metal (brass, Stainless steel....) Thermoplastic (PVC, PPSU, PVDF, PPS), that can also be reinforced with fibre glass reinforcement.

It is important to consider that the material of the fitting body must be harder than the material of the pipe surface in contact with the fitting body.

The body can be made from brass or polymer.

It should be understood that if the compression sleeve is made of metal, the deformation of the compression sleeve occurring during the crimping process will be permanent. However, if the compression sleeve is made of plastics, polymer or composite material, it might be needed to hinder later deformation so as to block the once deformed sleeve. Therefore, the external case 60, possibly also in plastics, may be provided with a hinder 90 to block the deformation release of the sleeve, and keeps the accordion in place after deformations, as seen on Fig. 5.

Indeed, the compression sleeve is preassembled and there is no need to reposition the compression sleeve before the crimping process. The compression sleeve is positioned in circumferential groove 33 of the fitting portion (as illustrated in Fig. 2), thus the compression sleeve does not protrude out of the case 60. During the crimping processes, the gaps between the peaks and the gaps between the valleys will crush and disappear. Therefore, the compression sleeve will flatten. The valleys push the pipe against the fitting support to make the connection, while the peaks are recessed with the case 60.

It should be noted that there is no need for pipe preparation if the fitting body does not contain an O-ring.

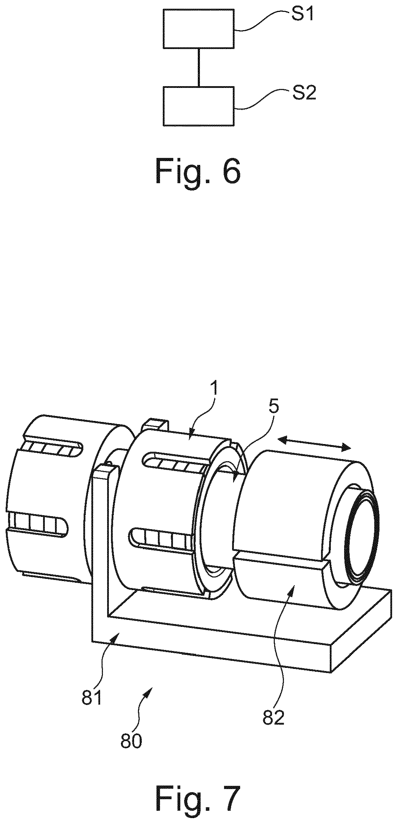

A method for connecting a tube and a press fitting is shown on figure 6. The method comprises only two steps when connecting a pipe end and the press fitting of the invention: inserting the pipe (S1), and pushing axially the compression sleeve towards the fitting portion of the main body (S2). At the end of the crimping process, the compression sleeve 20 is crushed against the fitting portion 12.

During the axial deformation of the compression sleeve 20, the valleys and peaks of the compression sleeve translate said axial deformation into an inward radial deformation leading to the crimping of the pipe against the fitting support 15. Optionally the outer case provides for a confined space such that deformation in the radial direction can be restricted or eliminated.

There is no need to pipe preparation or multi-body part assembling during installations.

Figure 7 shows a crimping tool 80 provided to push axially the compression sleeve 20. The tool comprises a fixed part 81, which can be fixedly mounted on the press fitting to hold the press fitting, in particular the fitting portion 12, and an axially moving part 82 which can be actuated by an actuation part. The moving part 82 is designed to be mounted around the pipe 5, and can be axially moved to push axially the compression sleeve 20, in order to squash the compression sleeve against the fitting portion or against the fixed part of the tool.

Preferably, the compression sleeve 20 is pushed axially against the fitting portion, from the pipe insertion end towards the fitting portion of the press fitting.

The compression sleeve may be fixed in a groove (33) on the body inside the case. The case is designed to withstand any radial force exercised by deformed sleeve. The crimping result can be assured by indication of tool displacement or amount of load provided , or visually via a possibility of a circumferential window which could be design on the case.

Instead of applying a radial force against the compression sleeve as in the prior art press fittings, the crimping tool 80 of the present invention is configured to apply an axial force against the compression sleeve.

The press fitting according to the invention requires much less energy to connect e. g. multilayer pipes in comparison with existent mechanical fitting, the amount of energy reduction is up to 70 %.

In addition, the press fitting and method of crimping of the present invention have great impact on the crimping tool, by reducing very considerably the weight of crimping tool to become lighter, more ergonomic, and increase its lifetime. In turn, this has great impact on health and performance of installer with lighter and more ergonomic tool.

## Claims

1. Press fitting for the connection of a pipe end, comprising
a main body (10) with a fitting portion (12) and a fitting support (15) extending in an axial direction from the fitting portion (12), a compression sleeve (20),
wherein the compression sleeve (20) has an accordion-shape with a plurality of valleys (26) in alternance with a plurality of peaks (27), the accordion shape being configured to translate an axial deformation of the compression sleeve (20) into an inward radial force allowing to provide a secure engagement with the pipe end, and leading to the crimping of the pipe end against the fitting support (15),
**characterised in that** the compression sleeve (20) is designed to surround the fitting support (15),
and the compression sleeve (20) and the fitting support (15) define a pipe insertion space (18) radially between the compression sleeve (20) and the fitting support (15) for inserting a pipe end to be fixed on said fitting support (15).

2. Press fitting according to claim 1, wherein the plurality of valleys defines a plurality of contact zones in contact with the pipe end when the pipe end is inserted into the pipe insertion space, to transmit the inward radial force to the pipe end.

3. Press fitting according to claim 1 or 2, wherein the valleys define a curvature area with a valley radius and the peaks have a peak angle, wherein the peak angle is chosen to prevent an outward radial deformation of compression sleeve (20) and the valley radius is determined as a function of the diameter of the pipe, in particular wherein, for a pipe diameter comprised in the range of 16 mm to 60 mm, the valley radius varies from 1 to 10 mm, preferably from 1.5 to 7 mm, the distance between the peak and valleys varies from 2 to 12 mm, in particular from 4 mm to 10 mm, and the peak angle between peak varies between 30° to 60°.

4. Press fitting according to any one of the preceding claims, wherein the compression sleeve (20) is mounted to the fitting portion (12) via a cooperating fixation arrangement, in particular wherein, wherein a radial projection (32) may be provided on one of the compression sleeve (20) and the fitting portion (12)to cooperate with a recess (33) on the other one of the fitting portion (12) and the compression sleeve (20).

5. Press fitting according to any one of the preceding claims, further comprising an external case (60) around the compression sleeve (20) to prevent outward radial deformation of the compression sleeve (20) during crimping, in particular wherein the case has one or more axial grooves (64) spaced apart in the circumferential direction.

6. Press fitting according to any one of the preceding claims, wherein the fitting portion (12) or the outer case is provided with windows spaced apart in the circumferential direction, to allow to visually observe the correct pipe insertion.

7. Method of connecting a press fitting with a pipe end, comprising the steps of: inserting the pipe end into a pipe insertion space (18) between a fitting support (15) and a compression sleeve (20), wherein the compression sleeve (20) has an accordion-shape with a plurality of valleys (26) in alternance with a plurality of peaks (27), pushing axially the compression sleeve (20) to axially deform the compression sleeve (20), wherein the axial deformation of the compression sleeve (20) is translated into an inward radial deformation of the compression sleeve allowing to provide a secure engagement with the pipe, and leading to the crimping of the pipe end against the fitting support (15),
**characterised in that** the pipe end is inserted into the pipe insertion space (18) radially between the fitting support (15) and the compression sleeve (20).

8. Method according to the preceding claim, wherein the compression sleeve (20) is pushed towards the fitting portion (12).

9. Assembly of a press fitting according to any of claims 1 to 6 and a tool for connecting said press fitting with a pipe and/or for use in performing a method according any of claim 7 and 8, the tool comprising a fixed part, which can be engaged on the press fitting to hold the press fitting, in particular to the fitting portion (12), and an axially moving part designed to be mounted around the pipe, and to push axially the compression sleeve (20).

10. Assembly according to the preceding claim, wherein the fixed part is mounted to the fitting portion (12) and the axially moving part is designed to push axially the compression sleeve (20) towards said fitting portion (12).

## Patentansprüche

1. Pressfitting für den Anschluss eines Rohrendes, umfassend
einen Hauptkörper (10) mit einem Fittingabschnitt (12) und eine Fittingstütze (15), der sich in einer axialen Richtung von dem Fittingabschnitt (12) erstreckt, eine Kompressionshülse (20),
wobei die Kompressionshülse (20) eine Akkordeonform mit einer Vielzahl von Tälern (26) im Wechsel mit einer Vielzahl von Gipfeln (27) aufweist, wobei die Akkordeonform eingerichtet ist, um eine axiale Verformung der Kompressionshülse (20) in eine nach innen gerichtete Radialkraft umzusetzen, die einen sicheren Eingriff mit dem Rohrende ermöglicht und zum Verpressen des Rohrendes gegen die Fittingstütze (15) führt,
**dadurch gekennzeichnet, dass** die Kompressionshülse (20) ausgelegt ist, um die Fittingstütze (15) zu umgeben,
und die Kompressionshülse (20) und die Fittingstütze (15) einen Rohreinführraum (18) radial zwischen der Kompressionshülse (20) und der Fittingstütze (15) zum Einführen eines an der Fittingstütze (15) zu befestigenden Rohrendes definieren.

2. Pressfitting nach Anspruch 1, bei welcher die Vielzahl von Tälern eine Vielzahl von Kontaktzonen definiert, die mit dem Rohrende in Kontakt stehen, wenn das Rohrende in den Rohreinführraum eingeführt ist/wird, um die nach innen gerichtete Radialkraft auf das Rohrende zu übertragen.

3. Pressfitting nach Anspruch 1 oder 2, bei welcher die Täler eine Krümmungsfläche mit einen Talradius definieren und die Gipfel einen Gipfelwinkel aufweisen, wobei der Gipfelwinkel gewählt ist, um eine radiale Verformung der Kompressionshülse (20) nach außen zu vermeiden und der Talradius in Abhängigkeit vom Durchmesser des Rohres bestimmt ist, insbesondere liegt bei einem Rohrdurchmesser im Bereich von 16 mm bis 60 mm der Talradius zwischen 1 und 10 mm, vorzugsweise zwischen 1,5 und 7 mm, der Abstand zwischen der Spitze und den Tälern zwischen 2 und 12 mm, vorzugsweise 4 mm und 10 mm, und der Gipfelwinkel zwischen den Gipfeln liegt zwischen 30° und 60°.

4. Pressfitting nach einem der vorangehenden Ansprüche, bei welchem die Kompressionshülse (20) über eine Wechselwirkungs-Befestigungsanordnung an dem Fittingabschnitt (12) angebracht ist, insbesondere kann die Kompressionshülse (20) oder der Fittingabschnitt (12) mit einem radialen Vorsprung (32) der vorgesehen sein, um mit einer Ausnehmung (33) an dem anderen Teil, d.h. an der Kompressionshülse (20) oder an dem Fittingabschnitt (12), wechselzuwirken.

5. Pressfitting nach einem der vorangehenden Ansprüche, ferner ein Außengehäuse (60) um die Kompressionshülse (20) herum aufweisend, um eine radiale Verformung der Kompressionshülse (20) nach außen während des Verpressens zu verhindern, insbesondere weist das Gehäuse eine oder mehrere in Umfangsrichtung beabstandete axiale Nuten (64) auf.

6. Pressfitting nach einem der vorangehenden Ansprüche, bei welchem der Fittingabschnitt (12) oder das Außengehäuse mit in Umfangsrichtung beabstandeten Fenstern versehen ist, um das korrekte Einsetzen des Rohres visuell beobachten zu können.

7. Verfahren zum Verbinden eines Pressfittings mit einem Rohrende, das die folgenden Schritte umfasst: Einsetzen des Rohrendes in einen Rohreinführraum (18) zwischen einer Fittingstütze (15) und einer Kompressionshülse (20), wobei die Kompressionshülse (20) eine Ackordeonform mit einer Vielzahl von Tälern (26) im Wechsel mit einer Vielzahl von Gipfeln (27) aufweist, axiales beaufschlagen der Kompressionshülse (20), um die Kompressionshülse (20) axial zu verformen, wobei die axiale Verformung der Kompressionshülse (20) in eine nach innen gerichtete radiale Verformung der Kompressionshülse (20) umgesetzt wird, was einen sicheren Eingriff mit dem Rohr ermöglichet und zum Verpressen des Rohrendes gegen die Fittingstütze (15) führt,
**dadurch gekennzeichnet, dass** das Rohrende radial in den Rohreinführungsraum (18) zwischen der Fittingstütze (15) und der Kompressionshülse (20) eingeführt ist/wird.

8. Verfahren nach dem vorangehenden Anspruch, wobei die Kompressionshülse (20) in Richtung des Fittingabschnittes (12) geschoben wird.

9. Anordnung aus einem Pressfitting nach einem der Ansprüche 1 bis 6 und einem Werkzeug zur Verbindung des Pressfittings mit einem Rohr und/oder zur Verwendung bei der Durchführung eines Verfahrens nach einem der Ansprüchen 7 und 8, wobei das Werkzeug ein feststehendes/ einen festehenden Teil aufweist, das/der mit dem Pressfitting in Eingriff gebracht werden kann um das Pressfitting zu halten, insbesondere mit dem Fittingabschnitt (12), , und ein axial bewegliches / einen axial beweglichen Teil, eingerichtet, um um das Rohr herum montiert zu werden und um die Kompressionshülse (20) axial zu beaufschlagen.

10. Anordnung nach dem vorangehenden Anspruch, bei welcher das/der feststehende Teil an dem Fittingabschnitt (12) montiert ist/wird und das/der axial bewegliche Teil eingerichtet ist, um die Kompressionshülse (20) hin zu dem Fittingabschnitt (12) axial zu beaufschlagen.

## Revendications

1. Raccord à compression pour la connexion d'une extrémité de tuyau, comprenant
un corps principal (10) avec une partie de raccord (12) et un support de raccord (15) s'étendant dans une direction axiale à partir de la partie de raccord (12), un manchon de compression (20),
dans lequel le manchon de compression (20) a une forme en accordéon avec une pluralité de vallées (26) en alternance avec une pluralité de pics (27), la forme en accordéon étant configurée pour traduire une déformation axiale du manchon de compression (20) en une force radiale vers l'intérieur permettant d'assurer un engagement sûr avec l'extrémité de tuyau, et conduisant au sertissage de l'extrémité de tuyau contre le support de raccord (15),
**caractérisé en ce que** le manchon de compression (20) est conçu pour entourer le support de raccord (15),
et **en ce que** le manchon de compression (20) et le support de raccord (15) définissent un espace d'insertion de tuyau (18) radialement entre le manchon de compression (20) et le support de raccord (15) pour l'insertion d'une extrémité de tuyau à fixer sur ledit support de raccord (15).

2. Raccord à compression selon la revendication 1, dans lequel la pluralité de vallées définit une pluralité de zones de contact en contact avec l'extrémité de tuyau lorsque l'extrémité de tuyau est insérée dans l'espace d'insertion de tuyau, afin de transmettre la force radiale vers l'intérieur à l'extrémité de tuyau.

3. Raccord à compression selon la revendication 1 ou 2, dans lequel les vallées définissent une zone de courbure avec un rayon de vallée et les pics ont un angle de pic, l'angle de pic étant choisi pour empêcher une déformation radiale vers l'extérieur du manchon de compression (20) et le rayon de vallée est déterminé en tant que fonction du diamètre du tuyau, en particulier dans lequel, pour un diamètre de tuyau compris entre 16 mm et 60 mm, le rayon de vallée varie de 1 à 10 mm, de préférence de 1,5 à 7 mm, la distance entre le pic et les vallées varie de 2 à 12 mm, en particulier de 4 mm à 10 mm, et l'angle de pic entre les pics varie de 30° à 60°.

4. Raccord à compression selon l'une quelconque des revendications précédentes, dans lequel le manchon de compression (20) est monté à la partie de raccord (12) par l'intermédiaire d'un agencement de fixation coopératif, en particulier dans lequel une saillie radiale (32) peut être prévue sur l'un du manchon de compression (20) et de la partie de raccord (12) pour coopérer avec un renfoncement (33) sur l'autre de la partie de raccord (12) et du manchon de compression (20).

5. Raccord à compression selon l'une quelconque des revendications précédentes, comprenant en outre un boîtier externe (60) autour du manchon de compression (20) pour empêcher la déformation radiale vers l'extérieur du manchon de compression (20) pendant le sertissage, en particulier dans lequel le boîtier présente une ou plusieurs rainures axiales (64) espacées les unes des autres dans la direction circonférentielle.

6. Raccord à compression selon l'une quelconque des revendications précédentes, dans lequel la partie de raccord (12) ou le boîtier extérieur est pourvu de fenêtres espacées dans la direction circonférentielle, pour permettre d'observer visuellement l'insertion correcte du tuyau.

7. Procédé de raccordement d'un raccord à compression avec une extrémité de tuyau, comprenant les étapes suivantes : insérer l'extrémité de tuyau dans un espace d'insertion de tuyau (18) entre un support de raccord (15) et un manchon de compression (20), dans lequel le manchon de compression (20) a une forme en accordéon avec une pluralité de vallées (26) en alternance avec une pluralité de pics (27), pousser axialement le manchon de compression (20) pour déformer axialement le manchon de compression (20), dans lequel la déformation axiale du manchon de compression (20) se traduit par une déformation radiale vers l'intérieur du manchon de compression, permettant d'assurer un engagement sûr avec le tuyau, et conduisant au sertissage de l'extrémité de tuyau contre le support de raccord (15),
**caractérisé en ce que** l'extrémité de tuyau est insérée dans l'espace d'insertion de tuyau (18) radialement entre le support du raccord (15) et le manchon de compression (20).

8. Procédé selon la revendication précédente, dans lequel le manchon de compression (20) est poussé vers la partie raccord (12).

9. Assemblage d'un raccord à compression selon l'une quelconque des revendications 1 à 6 et d'un outil pour raccorder ledit raccord à compression à un tuyau et/ou pour utilisation dans la mise en oeuvre d'un procédé selon l'une quelconque des revendications 7 et 8, l'outil comprenant une partie fixe, qui peut être engagée sur le raccord à compression pour maintenir le raccord à compression, en particulier sur la partie de raccord (12), et une partie mobile axialement conçue pour être montée autour du tuyau, et pour pousser axialement le manchon de compression (20).

10. Assemblage selon la revendication précédente, dans lequel la partie fixe est montée sur la partie de raccord (12) et la partie mobile axialement est conçue pour pousser axialement le manchon de compression (20) vers ladite partie de raccord (12).
